# EUROPEAN PATENT SPECIFICATION

(11) **EP 4 198 656 B1**
(45) Date of publication and mention of the grant of the patent: **28.01.2026**
(21) Application number: 21214806.8
(22) Date of filing: 15.12.2021
(51) Int. Cl.: G05B 15/02, F24F 11/32

(54) **METHOD AND SYSTEM FOR MONITORING AN HVAC APPARATUS**
VERFAHREN UND SYSTEM ZUR ÜBERWACHUNG EINES HLK-GERÄTES
PROCÉDÉ ET SYSTÈME DE SURVEILLANCE D'UN APPAREIL CVC

(43) Date of publication of application: 21.06.2023
(73) Proprietor: Viessmann Holding International GmbH, 35108 Allendorf (Eder) (DE)
(72) Inventor: SOBKÓW, Piotr, 54-029 Wroclaw (PL); WÖLK, Sascha, 35066 Frankenberg (DE)
(74) Representative: MERH-IP Matias Erny Reichl Hoffmann Patentanwälte PartG mbB

(56) References cited:
- US-A1- 2016 370 799
- US-A1- 2018 031 256
- US-A1- 2019 195 525

## Description

### Technical Field

The present application, as set out in the appended claims, relates to the technical field of HVAC apparatuses, and in particular to the monitoring of HVAC apparatuses.

### Background

An HVAC apparatus located at the site of an end user may constantly generate and optionally transmit the corresponding operation data, wherein the operation data may include, for instance, operating parameters of the components in the HVAC apparatus (system), environmental parameters collected by sensors in the HVAC apparatus, internal error messages and etc. The operation data collected after a certain period of time, for instance, 6 months, or 1 year, or 2 years, may be further transmitted to a technician, or via a central unit and then further to the technician, such that the technician, having received the operation data collected in the past period of time, carries out an on-site check of the HVAC apparatus by in particular removing problems identified in the past period of time. In principle, the on-site check by the technician is expected to be carried out at the end of each period, for instance, each 6 months, or each 1 year, or each 2 years, so as to ensure safe operations of the HVAC apparatus.

However, that the technician should always, regardless of whether it is necessary to do so, check on site at the end of each predetermined period, would lower the efficiency of the maintenance since it may not always be necessary for the technician to check on site, at the end of each period, the problems or anomalies. For instance, some anomalies may be incurred by the failure of the internet connection at the end user's site, which could be easily and quickly dealt with by the end user, possibly already at the time of identifying this anomaly, meaning that it is not necessary in this case for the technician to check this anomaly on site. Further, frequent on-site maintenance work would also result in high costs for both the end user and the technical service provider (technician).

Further, it is expected that the end user would not always be informed of or know all of the problems or anomalies that have occurred in the past period of time either due to a lack of efficient communication between the technical service provider and the end user, or due to that the end user does not have the level of professional knowledge of a technician. Additionally, as discussed in the above, it may be the case that the end user could also deal with the problems/anomalies, which also renders it unnecessary to still instruct the technician to carry out a pre-scheduled on-site maintenance for the past period of time. Therefore, it appears that there still lacks transparency in the inspection of remote HVAC apparatuses.

Moreover, the after-sales service which has both the information of the end user and of the HVAC product that is delivered to that end user, is not always involved in the inspection of that delivered HVAC apparatus. In particular, it may be the case that a technician would have to check first with the after-sales service in order to sort out a certain anomaly with a certain component of the HVAC apparatus, for instance an anomaly with the compressor in the heat pump. Therefore, without having involved the after-sales service provider in the inspection, the efficiency and transparency of an automatic and permanent inspection of the HVAC apparatus is also lowered.

Document US 2018/0012479 A1 relates to an HVAC system which may be monitored. Therein, a measurement apparatus for the monitoring system can perform specific measurements and monitoring of the HVAC system. The measurements and monitoring information may then be provided to a user via, for instance, a visual display. Further, all collected data measurements, alerts and communication between the user and the monitoring system may be time stamped, so as to calculate a daily duty cycle of the HVAC system, which is then transmitted to a cloud-based storage system. Further, the monitoring system may then send one or more daily reports to a user computing device. In this document measurements and communication information could be communicated, on a daily basis, to the user. However, this document does not address the problem of determination as to whether an on-site maintenance work needs to be carried out by a technician, in particular in an efficient manner, for removing anomalies/problems of the HVAC apparatus and for reducing the costs incurred thereby. Further, the problem as discussed in the above relating to improvement of transparency in the inspection of the HVAC system among all parties including the after-sales service provider remains to be addressed in view of this document. Therefore, there exists still the need of improving efficiency and transparency of the inspection of an HVAC system/apparatus.

Further, document US 2018/0032969 A1 also mentions that operating data and/or status indicators can be transmitted to a controller of an HVAC system. Thus, the controller may monitor the operation of the HVAC components. Based on a determination as to whether the current value of the operating parameter is outside an expected value range, the controller can initiate a diagnostic mode. In particular, the HVAC system may perform the diagnostic mode at least once before, for instance, each summer season to ensure operation of the HVAC system. Consequently, certain actions or requests may be communicated to the user via a user interface.

Document US 2016/370799 A1 discloses a similar system and method for self-learning fault detection and diagnosis in an HVAC system, including a server identifying a fault and one or more predicted causes of the fault based on measurements of operational parameters received from sensors associated with the HVAC system. The operational parameters are compared to evaluation criteria, such as predetermined thresholds, to identify a potential fault. Evaluation criteria for each fault are periodically analyzed in view of operational parameter history to identify new criteria having a lower probability of misdiagnosis. Fault detection criteria which are determined to have an unacceptable error rate may be deactivated or flagged for review.

Document US 2019/195525 A1 discloses a method for operating a HVAC unit deployed in a building, performing remedial analytics and generating recommendation for remedial action based on the result of the analytics.

Document US 2018/031256 A1 discloses a system for monitoring and controlling HVAC equipment within a building space. The system is shown to include a controller for controlling HVAC equipment, which services the building space. The controller is configured to communicate with a maintenance service over a network. The system further includes a user device. The user device may be a computing device utilized by the user. The user device may be configured to interface with the controller either directly or via the network.

However, again these documents do not address the problem of how to avoid unnecessary on-site maintenance work that exists in the art as discussed in the above, and still lacks an integrated method where all parties, including the technician, the end-user and the after-sales service provider, are efficiently involved, such that problems and anomalies can be removed in an efficient manner without incurring high costs for the parties involved.

In summary, there exists a need of a method for monitoring an HVAC apparatus, which method can assist in reducing the frequency of, or avoiding unnecessary on-site maintenance work carried out by a technician, improve efficiency in anomaly removal, both with on-site maintenance by the technician and without on-site maintenance work by the technician if it is deemed unnecessary to do that, and in the meantime ensure permanent and automatic inspection of the HVAC system for detecting and resolving anomalies and problems, with improved transparency.

### Summary of the Invention

It is thus an objective of the present application to provide a method for monitoring an HVAC apparatus, which is efficient and cost-effective, with improved transparency. The method in accordance with the present application is described in accordance with independent claim 1, whereas preferred embodiments thereof are described in accordance with dependent claims 2-11.

It is also an object of the present application to provide a system, or network, for monitoring an HVAC apparatus. The system in accordance with the present application is described in accordance with claim 12.

It is also an object of the present application to provide computer program (products) which, when being executed by the respective components in the system as mentioned above, carry out the method steps in accordance with the above method. Such computer program (products) are described in accordance with claim 13.

In accordance with the present application there is provided a method for monitoring an HVAC apparatus, as defined in claim 1.

Therein, the central unit is preferably provided with data storage and processing means, so as to receive and store the relevant data, and to process the received and stored data. Further, the operation data is preferably transmitted by the HVAC apparatus through wired and/or wireless connections to the central unit, wherein the operation data preferably comprises operation parameters of components comprised in the HVAC apparatus, the components including, for instance, heat pump, boiler and compressor, as well as environmental data collected by sensors in the HVAC apparatus, and internal error messages generated by, for instance, an internal diagnostic function provided in the HVAC apparatus.

Further, the central unit is preferably configured with multiple remote monitoring/inspection functions, such that the operation data transmitted from the HVAC apparatus can be analyzed, preferably with respect to specific problems, anomalies, degradation, or fault prediction of parts/components comprised in the HVAC apparatus.

For instance, on the basis of the operation data relating to the fill-level of the cooling medium for a heat pump, it could be determined by the central unit as to whether the fill-level has reduced to under an expected level for the cooling medium. Analogously, the degradation of an electrode for a gas burner can be detected by the inspection functions configured in the central unit. Further, analogously the degradation of heat exchangers in the HVAC apparatus could also be identified and detected by the central unit on the basis of the received operation data. Therefore, an anomaly event is preferably associated with a specific component in the HVAC apparatus, such that the central unit, on the basis of the specific operation data of that specific component, is configured to determine as to whether that specific component is not running as expected or pre-determined.

Further, the central unit then generates and stores an inspection data item on the basis of the determination of occurrence of an anomaly event. Therefore, one inspection data item preferably relates to determination as to the occurrence of an anomaly event which is associated with a specific component and preferably at a specific time. Therefore, the data structure of one inspection data item preferably includes a field which indicates a specific component in the HVAC apparatus, a field which indicates as to whether it is determined that an anomaly event has occurred in relation to that specific component and a field which indicates as to the specific point of time at which the anomaly event has occurred or has been detected by the central unit. Of course, the data structure of an inspection data item is not limited to the above fields, and may further include, for instance, a field indicating the identification of the HVAC apparatus involved. Further, in the case where it is determined by the central unit that an anomaly event has occurred, the field indicating an anomaly event could be configured as "0", whereas in the case that it is determined by the central unit that no anomaly events have occurred in the specific component at this point of time, the field indicating an anomaly event in the data structure could then be configured as "1", or vice versa. The arrangement of the data structure of an inspection item in relation to a component comprised in the HVAC apparatus of course belongs to the basic knowledge of the person skilled in the art, and hence will not be explained to the greatest details here.

Further, the central unit generates the maintenance data which comprises all inspection data items generated in a pre-determined period of time. Thus, the maintenance data preferably comprises all of the inspection data items of at least one component comprised in the HVAC apparatus and generated in the pre-determined period of time. For instance, for a specific component in the HVAC apparatus, the maintenance data can comprise the respective inspection data items associated with the specific component that are generated and stored at a plurality of points of time in the pre-determined period of time. Hence, the maintenance data may further comprise all such inspection data items of all of the components that are comprised in the HVAC apparatus and are monitored by the central unit.

Further, the central unit transmits a generated inspection data item, i.e., in an instant manner at the corresponding point of time of the generation and storing of that inspection data item, to a first device, and/or transmits the maintenance data that comprises the inspection data items collected in the pre-determined period of time to the first device. Therein, the first device is preferably a computing device that is provided for a technician or a technical service provider, such that the technician can provide the first inspection information after having checked the received inspection data item(s) and/or the maintenance data. The first device is located at a site that is different from the HVAC apparatus, i.e., from the end user.

Therefore, in accordance with the method provided by the present application the technician is automatically and instantly and/or permanently informed of any anomaly events that have occurred in the HVAC apparatus in particular in a pre-determined period of time, such that the technician can already verify or assess the anomaly events that have been transmitted to the first device in the form of inspection data item(s) and/or the maintenance data, prior to any decisions as to whether and how to deal with the anomalies and in particular, as to whether an on-site maintenance work is necessary for dealing with the anomaly events collected in the pre-determined period of time. Thereby, in general the frequency of on-site maintenance work can be reduced in accordance with the method, saving costs for both the end user and the technical service provider, leading to improved efficiency in addressing the anomaly events in the HVAC apparatus.

Preferably, the method in accordance with the present application further comprises: providing, by the central unit, first request information in the inspection data item, preferably for requesting the first inspection information via the first device, the first inspection information comprising an indication as to whether the determination of occurrence of an anomaly event is correct.

Therein, the technician receives, via the first device, the first request information included in the received inspection data item, such that the technician is specifically requested to provide the first inspection information via the first device. Therein, the first request information may be transmitted together with one inspection data item for one specific component in the HVAC apparatus at one specific point of time, or alternatively the first request information may also be transmitted together with a plurality of inspection data items, and/or with the maintenance data comprising all of the inspection data items collected in a pre-determined period of time. Further, the first inspection information that is provided via the first device preferably comprises an indication/evaluation from the technician as to whether the determination of the occurrence of an anomaly event included in the inspection data item(s) and/or the maintenance data is correct or not.

Therefore, in accordance with the method provided by the present application the technician is reminded through the first request information to check, prior to any decisions as to the removal of the anomaly events or an on-site maintenance work, whether the determination provided by the central unit is correct or not. In this manner, wrongly determined anomaly events could be removed at an early stage, without incurring any costs for the end user and the technical service provider. Thereby, efficiency in inspection and maintenance of the HVAC apparatus is further improved.

According to the invention, the method further comprises: transmitting, by the first device, first instruction information to the central unit, preferably for instructing the HVAC apparatus to carry out a first diagnostic function; and according to the invention, transmitting, by the first device, the first inspection information to the central unit, for indicating a first diagnosed condition of the HVAC apparatus.

Therein, the first device may transmit the first instruction information to the central unit which preferably then further transmits the first instruction information to the HVAC apparatus, such that the HVAC apparatus is instructed to carry out a first diagnostic function. Therein, the first diagnostic function preferably refers to an internal diagnostic function provided for the HVAC apparatus. In such a manner, diagnostic information provided by the HVAC apparatus itself could be further transmitted back via the central unit to the first device, which thus assists in the evaluation of the anomaly events. Thus, preferably the first inspection information further comprises an indication as to the first diagnosed condition of the HVAC apparatus, which first diagnosed condition may be provided by the technician by way of checking the inspection data items and/or the maintenance data transmitted to the first device based on technical experiences, and/or by the technician checking the above diagnostic information transmitted from the HVAC apparatus after carrying out the first diagnostic function, and/or by an on-site maintenance carried out by the technician.

Therefore, in accordance with the method provided by the present application the internal diagnostic function, namely the first diagnostic function provided for the HVAC apparatus and the first diagnosed condition of the HVAC apparatus provided by the technician through the first device are used/combined in different manners, such that the technician is enabled to provide an evaluation or a diagnosis of the condition of one or more components of the HVAC apparatus, in particular after having received the inspection data item(s) and/or the maintenance data and both prior to and after an on-site maintenance visit at the site of the end user. Therein, the diagnostic information provided by the internal diagnostic function of the HVAC apparatus can also be optionally taken into account by the technician in improving the accuracy and efficiency of assessment and/or removal of the anomaly events. Therein, preferably the first diagnosed condition is provided in a form of recommendation for possible solutions of the anomaly events, which is preferably provided in the maintenance data for being transmitted to the first device and the end user. Of course, the central unit may also be provided with one or more diagnostic functions which analyse the received operating data so as to provide diagnoses of the determined anomaly events.

According to the invention, the method further comprises: transmitting, by the central unit, the inspection data item and/or the maintenance data to a second device for providing second inspection information, the second device being located at the site of the HVAC apparatus; and transmitting, by the second device, the second inspection information to the central unit, for indicating a second diagnosed condition of the HVAC apparatus.

Therein, the central unit transmits the inspection data item(s) and/or the maintenance data to the second device which is preferably a computing device provided for an end user, and hence is preferably located at the same site as the HVAC apparatus. Of course, the second device may also be a mobile device provided for the end user, such that the second device is not necessarily always at the same site as the HVAC apparatus. Further, the second device is also provided with data storage and processing means. Therein, the end user according to the method provides the second inspection information via the second device which further transmits the second inspection information to the central unit, thereby indicating the second diagnosed condition of the HVAC apparatus. Thus, the determination by the central unit as to occurrence of anomaly events in the HVAC apparatus can be further supplemented by the end user through the second diagnosed condition. The end user is preferably instructed, by a second instruction information comprised in the inspection data item(s) and/or the maintenance data transmitted to the second device, to carry out a second diagnostic function so as to obtain and provide the second diagnosed condition of the HVAC apparatus.

For instance, the end user may be instructed to take a photo after visual inspection of the HVAC apparatus. The end user may then upload photos to enable remote inspections of the HVAC apparatus, such that the technician may check the photos uploaded by the second device to the central unit, and/or algorithms provided for the central unit or for the first device may also automatically detect any anomaly events or faults that appear in the uploaded pictures from the end user. Further, the end user may be instructed to fill out a checklist regarding the conditions of components in the HVAC apparatus, comprising, for instance, a possible water leakage from pipes, the condition of an outdoor unit of the heat pump, any corrosion that might have appeared in the HVAC apparatus, the water pressure and etc. Therein, the checklist to be filled out by the end user is preferably generated automatically on the basis of the machine configuration, and/or environmental and other sensors in the HVAC apparatus, and/or manual pressure check necessities associated with the specific HVAC apparatus. In other words, a customized checklist may be generated for the end user to fill out for indicating the second diagnosed condition of the HVAC apparatus.

Therefore, in accordance with the method provided by the present application the end user is efficiently involved in the maintenance and inspection of the HVAC apparatus by already providing an on-site visual inspection of the HVAC apparatus before any on-site check, such that the inspection results could be further transmitted to the central unit and further to the first device for the technical service provider to remotely check the conditions of the corresponding components in the HVAC apparatus. In particular, the end user is provided with a means for providing customized evaluations of the HVAC apparatus on site to assist in the maintenance process of the HVAC apparatus carried out by the technician which is remotely located from the HVAC apparatus. Thereby, transparency and efficiency in inspection and maintenance of the HVAC apparatus is further improved. For instance, the end user may also be further informed of possible solutions of dealing with the anomaly events without the technician having to check on site those anomaly events since the technician can identify anomalies according to the second diagnosed condition, wherein for instance the end user may be instructed to carry out some maintenance work including the exchange of a water or air filter in the HVAC apparatus, which thus saves the need for the technician to check on site the anomaly event associated with the water or air filter.

According to the invention, the method further comprises: transmitting, by the central unit, the inspection data item and/or the maintenance data to a third device for providing third inspection information, the third device being located differently from the HVAC apparatus and differently from the first device; and transmitting, by the third device, the third inspection information to the central unit, for indicating a third diagnosed condition of the HVAC apparatus.

Therein, the central unit further transmits the inspection data item(s) and/or the maintenance data to the third device which is preferably provided for an after-sales service provider so as to provide the third inspection information. Therefore, the third device is preferably located at a site that is different from the HVAC apparatus and also different from the first device which is provided for the technician. Therein, the transmission of the inspection data item(s) and/or the maintenance data to the third device may be initiated by the central unit, or may be initiated by the first device after having received the inspection data item(s) and/or the maintenance data from the central unit. In other words, the central unit or the technician may decide in view of the inspection data item(s) and/or the maintenance data that contact to the after-sales service provider is necessary for specific anomaly events. In particular, it is preferred that transmission to the third device is initiated when anomaly events associated with pre-determined components in the HVAC apparatus are detected. For instance, if an anomaly event with the compressor in the heat pump is determined to have occurred, it would be preferred for the third device to receive an indication as to the anomaly event. Therefore, the after-sales service provider may be instructed to check the status of the HVAC apparatus and the operation parameters that are available via remote diagnostic functions so as to provide the third inspection information, thereby indicating the third diagnosed condition of the HVAC apparatus. Therefore, with the third inspection information it may be indicated by the after-sales service provider that an on-site service may be necessary for the after-sales service provider to carry out services on site. For instance, the after-sales service provider may be aware that the remote diagnostic functions appear to have failed, or that a part of the HVAC apparatus needs to be replaced, in which cases an on-site service may then be indicated together with the third inspection information, thus informing the other parties, namely the end user and the technician that an on-site service will be carried out to remove the detected anomaly events concerning the therewith associated components of the HVAC apparatus.

Therefore, in accordance with the method provided by the present application, the after-sales service provider is also involved in the inspection and maintenance process of the HVAC apparatus, so as to automatically respond to certain anomaly events that can be dealt with by the after-sales service provider. Thereby, transparency and efficiency in inspection and maintenance of the HVAC apparatus is further improved. For instance, in cases where the anomaly events could be dealt with by the end user, the third device may instruct, via the third device and the central unit, the end user to remove the anomaly events. For instance, if the HVAC apparatus appears to be disconnected to the internet, the after-sales service provider may instruct the user to reconnect the HVAC apparatus, so as to efficiently remove this anomaly event.

Preferably, the method in accordance with the present application further comprises, if it is determined that an anomaly event has occurred in the HVAC apparatus: determining, by the central unit, whether case information associated with the determined anomaly event exists in the central unit, the case information being preferably associated with a third device for providing third inspection information, and the third device being located preferably differently from the HVAC apparatus and preferably differently from the first device, wherein: if it is determined that case information exists in the central unit, updating, by the central unit, the existing case information on the basis of the determined anomaly event; and if it is determined that case information does not exist in the central unit, generating, by the central unit, case information associated with the determined anomaly event.

Therein, in a case where the central unit determines that an anomaly event has occurred in a specific component in the HVAC apparatus, the central unit further determines as to whether any case information associated with that determined anomaly event already exists in the central unit. Therein, the case information is preferably related to the third device for providing the third inspection information as described in the above. More specifically, for an anomaly event associated with a specific part in the HVAC apparatus, a Customer Relation Management (CRM) system case, namely a CRM system case, (hereinafter referred to as "CRM case" for simplicity purposes) may have already been established in the central unit. For instance, the third device provided for the after-sales service provider may have already received via the third device an inspection data item associated with an anomaly event occurred in relation to, for instance, the same component in the HVAC apparatus, and then may have already established a CRM case in the central unit. Therefore, when the central unit determines that another anomaly event has occurred in relation to the same component in the HVAC apparatus, for which a CRM case already exists, the central unit needs only to update that existing CRM case on the basis of the now determined anomaly event, i.e., on the basis of the inspection data item recording this new anomaly event. If, the central unit cannot identify any case information, i.e., any CRM cases in the central unit that are associated with the presently determined anomaly event, the central unit then needs to generate new case information that is associated with the now determined anomaly event. Therein, more preferably, the central unit is provided with case information generation, storage and processing means or functionalities. Alternatively or additionally, a customer relationship management (CRM) system may be integrated into or provided in the central unit for generating, storing and processing the CRM cases. Alternatively or additionally, the central unit may also have access to the CRM system which is provided in another central unit in the form of, for instance, a cloud solution or service which can be accessed by the central unit through application programming interfaces.

Therefore, in accordance with the method provided by the present application, CRM cases are established or updated on the basis of the inspection data item(s) and/or the maintenance data generated and stored in the central unit. In particular, with the integration of the CRM case functionalities in the maintenance process of the HVAC apparatus, data that is available to the after-sales service provider and maintenance operations that can be carried out by the after-sales service provider can now be integrated into the maintenance process, so as to improve efficiency of the maintenance work. Thereby, transparency of the inspection and maintenance process is also improved. In addition, for specific components in the HVAC apparatus, CRM cases are respectively established and continuously updated in case of repeated anomaly events with those corresponding components in the HVAC apparatus, such that the anomalies can be better tracked.

Preferably, the case information in accordance with the present application comprises third instruction information, and the method in accordance with the present application further comprises: transmitting, by the central unit, the third instruction information to the third device, preferably for instructing the third device to carry out a third diagnostic function.

Therein, for a specific CRM case, the case information comprises the third instruction information which is transmitted to the third device, such that the third device is instructed to carry out the third diagnostic function which is configured for indicating the third diagnosed condition of the HVAC apparatus as described in the above. In other words, for an inspection data item indicating the occurrence of an anomaly evet in a specific component in the HVAC apparatus, the newly established CRM case or the updated CRM case may comprise the case information that includes the third instruction information which is transmitted to the third device for instructing the after-sales service provider to carry out the third diagnostic function. The third diagnostic function preferably includes, as described in the above, checking of the data that is available to the CRM service provider concerning particular parts in the HVAC apparatus, checking the status of the HVAC apparatus and the current operating parameters in the HVAC apparatus through diagnostic functionalities that are available to the after-sales service provider, preferably also via remote diagnostic functions provided in the central unit or in the HVAC apparatus. The thus diagnosed condition, i.e., the third diagnosed condition of the HVAC apparatus provided by the after-sales service provider can then be transmitted, as described in the above, to the central unit. In such a manner, diagnoses of the anomaly events in the HVAC apparatus from the after-sales can also be accessed via the central unit by the technician and the end user, thus improving transparency of the maintenance process. In particular, with the third diagnosed condition of the HVAC apparatus, the after-sales service provider may thus decide as to carry out a service trip to the site of the end user in case where all remote functionalities appear to have failed or in case where spare parts would have to be replaced.

Preferably, the method in accordance with the present application further comprises: updating, by the central unit, the inspection data item and/or the maintenance data after receiving the first inspection information, and/or the second inspection information, and/or the third inspection information; and transmitting, by the central unit, the updated inspection data item and/or the updated maintenance data to the first device, and/or the second device, and/or the third device.

Therein, as described in the above the first inspection information comprises indications as to the correctness of the determination of occurrence of anomaly events as well as the first diagnosed condition of the HVAC apparatus provided by the technician; the second inspection information comprises indications as to the second diagnosed condition of the HVAC apparatus provided by the end user; and the third inspection information comprises indications as to the third diagnosed condition of the HVAC apparatus provided by the after-sales service provider, wherein the first-third inspection information is transmitted to the central unit, thereby initiating the updating of the inspection data items or the maintenance data after the central unit receives the corresponding inspection information. More specifically, the first inspection information may reveal that the determination of occurrence of anomaly events provided by the central unit is not correct, which leads to that the central unit corrects the relevant field in the inspection data item or in the maintenance data. Analogously, the second inspection information may reveal that according to, for instance, the visual inspection results provided by the end user, even more anomaly events appear to be present, which thus leads to that the central unit updates the maintenance data. Analogously, with the third inspection information it may be indicated by the third device, i.e., the after-sales service provider that operating parameters accessed by the third device would reveal further anomaly events in the HVAC apparatus, which thus again leads to that the central unit changes the respective inspection data items in the maintenance data stored in the central unit. Thereafter, the updated inspection data items and/or the updated maintenance data is again transmitted to the first-third devices.

Therefore, in accordance with the method provided by the present application the HVAC apparatus is permanently monitored, the condition of which is timely updated, resulting in improved accuracy and efficiency of the determination of the anomaly events.

Preferably, the operation data in accordance with the method comprises a device ID indicating the HVAC apparatus, and a component ID indicating a component in the HVAC apparatus; and the inspection data item in accordance with the method comprises an anomaly ID indicating an anomaly event associated with the device ID and/or the component ID.

Therein, the HVAC apparatus located at the site of the end user is preferably identified by a device ID comprised in the operation data transmitted by the HVAC apparatus to the central unit. Further, a component in the HVAC apparatus is preferably identified by a component ID which is also comprised in the operation data. Thus, preferably one inspection data item is associated with a specific component in the HVAC apparatus, such that when it is determined that an anomaly event has occurred in relation to one component in the HVAC apparatus, an anomaly ID is furthermore provided for identifying this specific anomaly event that has occurred to the component in the HVAC apparatus. In other words, with one component ID and one corresponding device ID, there may exist different kinds of anomaly events, each being identified with a corresponding anomaly ID. Thus, preferably, one inspection data item comprises a device ID, a component ID as well as an anomaly ID.

Preferably, the maintenance data in accordance with the method comprises verification information provided by the first device, and/or the second device, and/or the third device, preferably for indicating anomaly events occurred after the generation of the maintenance data and before the transmission of the generated maintenance data.

Therein, the first-third devices may further provide verification information to be included in the maintenance data, in particular in a case where, after the maintenance data is generated and before the maintenance data is transmitted to the first-third devices (for instance, at the night after the generation of the maintenance data and before the next day when the maintenance data is transmitted to the devices), the technician, the end-user, and/or the after-sales service provider, which are all in permanent inspection of the HVAC apparatus, could, by carrying out the corresponding diagnostic functions, identify further anomaly events that have occurred during this intermediate period of time. As a result, those newly occurred anomaly events can be further included in the maintenance data for providing a more accurate summary of the anomaly events that have occurred in the past period of time.

Preferably, the method in accordance with the present application further comprises: generating, by the central unit, the inspection data item on a daily basis, and/or providing, by the central unit, a timestamp in the inspection data item, wherein the pre-determined period of time is preferably one year.

Therein, the inspection data item is preferably generated on a daily basis, wherein more preferably a time stamp is provided in the inspection data item indicating the specific point of time of the occurrence of an anomaly event recorded in the inspection data item. More preferably, the pre-determined period of time for collecting the inspection data items and hence for generating the maintenance data is 1 year. Thus, on the basis of the annual maintenance data, i.e., the report summarizing the anomaly events occurred in the past year, a decision could be made as to whether an on-site maintenance would be necessary, preferably on the basis of the first-third inspection information provided by the devices, i.e., all parties involved in the inspection process as described in the above, thus improving transparency and efficiency of the maintenance.

Preferably, the method in accordance with the present application further comprises: transmitting, by the central unit, the inspection data item and/or the maintenance data to the first device, and/or the second device, and/or the third device, via E-Mail, and/or via an application program installed on the corresponding device, and/or via a webpage.

Therein, the inspection data items and/or the maintenance data can be transmitted in different manners, including for instance, via E-mail, or via an application program installed on corresponding mobile devices provided for the parties, or via a webpage through which the parties can receive the corresponding information.

Preferably, the method in accordance with the present application further comprises: running, by the central unit, an algorithm for determining whether an anomaly event has occurred in the HVAC apparatus, wherein the algorithm is preferably associated with a component of the HVAC apparatus where the anomaly occurs.

Therein, one or more algorithms for determining the occurrence of anomaly events are running in the central unit, and more preferably, considering that the determinations as to the occurrence of different kinds of anomaly events associated with different components in the HVAC apparatus would be different from each other, the algorithms are specifically designed for the corresponding components to improve efficiency and accuracy of the determination. For instance, machine learning could be applied in the development of the corresponding algorithms.

Further, in accordance with the invention, there is provided a network/system for monitoring an HVAC apparatus, wherein the system comprises the HVAC apparatus, a central unit, a first device, a second device and a third device, such that the system is configured to carry out the above steps described of the method.

Therein, each of the central unit and the first-third devices is provided with data storage and processing means for receiving, storing and processing the corresponding data. In particular, the central unit is configured to carry out the method steps as described in the above in relation thereto, whereas each of the first-third devices is configured to carry out the corresponding method steps as described above in relation thereto.

Further, in accordance with the present application there are provided computer programs configured for carrying out the above described method steps.

More specifically, there is provided in accordance with the present application a computer program which, when being executed by an HVAC apparatus, carries out the steps described in the above in relation to the HVAC apparatus.

Further, there is provided in accordance with the present application a computer program which, when executed by a central unit (or by a data processing means provided in the central unit), carries out the steps described in the above in relation to the central unit.

Further, there is provided in accordance with the present application a computer program which, when being executed by a data processing means provided in the first device, causes the first device to carry out the steps described above in relation to the first device.

Further, there is provided in accordance with the present application a computer program which, when being executed by a data processing means provided in the second device, causes the second device to carry out the steps described above in relation to the second device.

Further, there is provided in accordance with the present application a computer program which, when being executed by a data processing means provided in the third device, causes the third device to carry out the steps described above in relation to the third device.

In summary, in accordance with the present application a method is provided for monitoring an HVAC apparatus, wherein the HVAC apparatus, the first device provided for a technician, the second device provided for an end user, the third device provided for an after-sales service provider, as well as additionally the case information associated with existing or new CRM cases can all be involved in the inspection and maintenance process in relation to the HVAC apparatus, with improved transparency and efficiency.

### Brief Description of the Drawings

- Fig. 1: shows a system in accordance with the present application for monitoring an HVAC apparatus;
- Fig. 2: shows a method in accordance with the present application for monitoring an HVAC apparatus;
- Fig. 3: shows a method in accordance with the present application for monitoring an HVAC apparatus;
- Fig. 4: shows a method in accordance with the present application for monitoring an HVAC apparatus;
- Figs. 5a-5b: show use cases of remote service integration in accordance with the present application; and
- Figs. 6a-6c: show use cases of integration of the remote service with the CRM system or functionalities in accordance with the present application.

### Detailed Description of the Drawings

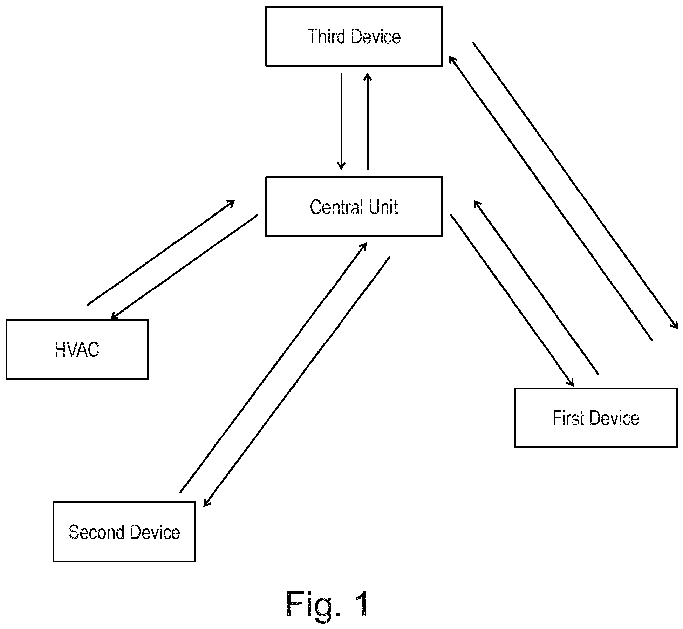

Fig. 1 shows a system for monitoring an HVAC apparatus in accordance with the present application, where a central unit, a first device, a second device and a third device may all be involved in carrying out the inspection and maintenance process of the HVAC apparatus.

Therein, the central unit is preferably provided with data storage and processing means, and as shown in Fig.1 is preferably provided with means for communicating with the HVAC apparatus and the devices. The HVAC apparatus is preferably located at the site of an end user, and further permanently transmits operation data to the central unit. Further, the HVAC apparatus is preferably also configured with means for receiving data from the central unit. Further, the central unit is preferably also provided with one or more diagnostic functions or algorithms which analyze the operation data received from the HVAC apparatus, so as to determine whether an anomaly event has occurred in the HVAC apparatus. Thus, the central unit is configured to generate an inspection date item, preferably associated with a specific component (preferably identified by a component ID) comprised in the HVAC apparatus (preferably identified by a device ID). For instance, if it is determined that an anomaly event has occurred in one component in the HVAC apparatus, one field corresponding to indicating the anomaly status in the inspection data item is correspondingly labelled with, for instance, "0", whereas if it is determined that there has occurred no anomaly events in the component of the HVAC apparatus, that field in the inspection data item is accordingly labelled as "1", or vice versa. More preferably, one inspection data item is not only associated with a specific component in the HVAC apparatus, but also associated with a specific point of time of the occurrence of the anomaly event, and preferably also with a specific kind of anomaly event (preferably identified by an anomaly ID) that has occurred in that component. Therefore, for each component, a plurality of inspection data items concerning different kinds of anomaly events and occurring at different points of time could be collected. Therefore, after a pre-determined period of time, a plurality of inspection data items may form the basis of a maintenance report summarizing all of the anomaly events that have occurred in relation to different components in the HVAC apparatus in the past pre-determined period of time.

Further, the central unit transmits the inspection data item(s) and the maintenance data (report) to the first-third devices. Preferably, between the central unit and respectively the first device, the second device and the third device, there are provided respective bi-directional communications in between.

More specifically, the first devices is preferably provided for a technician that can be instructed to provide first inspection information to the central unit after the first device receives from the central unit the inspection data item(s) and/or the maintenance report. Therein, the first device is located at a site different from that of the HVAC apparatus. Preferably, the first device also receives together with the maintenance report or the inspection data item(s) first request information requesting for input of the first inspection information via the first device. This applies analogously to the second device which is preferably provided for an end user and the third device which is preferably provided for an after-sales service provider. Thus, the second device may receive along with the inspection data item(s) or the maintenance report a second request information requesting for input of the second inspection data and the third device may in a similar manner receive a third request information.

Further, the first inspection information input via the first device may include information regarding whether a determination by the central unit as to the occurrence of anomaly events is correct or not. Further, the first inspection information may also comprise a first diagnosed condition provided by the technician, which preferably is provided on the basis of the technical experiences of the technician, and/or a diagnostic result/information provided by a first diagnostic function of the HVAC apparatus, which result is transmitted to the central unit and then further downloaded by the first device to the technician, and/or other diagnostic functions that are running in the central unit.

Further, the second device is preferably provided for an end user, and is located at the site of the HVAC apparatus. Of course, the second device can also be provided in the form of a mobile device, such that it is not necessarily always at the site of the HVAC apparatus. Therein, the inspection data item(s) and/or the maintenance report transmitted to the second device may further comprise second instruction information for instructing the second device to carry out a second diagnostic function. More specifically, the central unit and/or the first device, after having generated or received the inspection data item(s) and/or the maintenance report, may provide recommendations for instructions on the basis of assessment of the determined anomaly events. For instance, the first device may provide through the first inspection information that operations by the end user may be carried out to remove the anomaly events. In this way, the second device receives from the central unit the second instruction information for being instructed to carry out the second diagnostic function. Further, the second diagnostic function may be carried out to indicate the second diagnostic condition of the HVAC apparatus. For instance, the second diagnostic condition may be indicated in a photo taken by the end user of the components of the HVAC apparatus, or may be provided in the form of a checklist filled out indicating conditions of different components in the HVAC apparatus. In such a manner, a visual inspection carried out by the end user can be informed to the central unit and the first device, i.e., the technician, for a better evaluation/assessment of the anomaly events and/or the condition of the HVAC apparatus.

Further, the third device is preferably provided for an after-sales service provider, and further is located at a site that is different from the sites of the HVAC apparatus and the technician. Therein, the third inspection information input by the third device preferably comprises an indication as to a third diagnosed condition of the HVAC apparatus, which is preferably carried out by an after-sales service provider which has access to operating parameters of the HVAC apparatus provided through diagnostic functions running, for instance, in the central unit. Thus, with the third diagnostic condition provided by the third device, the assessment from the after-sales service provider as to the anomaly events contained in the maintenance report can also be provided to the central unit. Additionally, there are preferably provided also bi-directional communications between the third device and the first device, such that both the technician and the after-sales service provider are informed of the status of the anomaly events and are provided with the information as to whether some of the anomaly events have been dealt with by the other party.

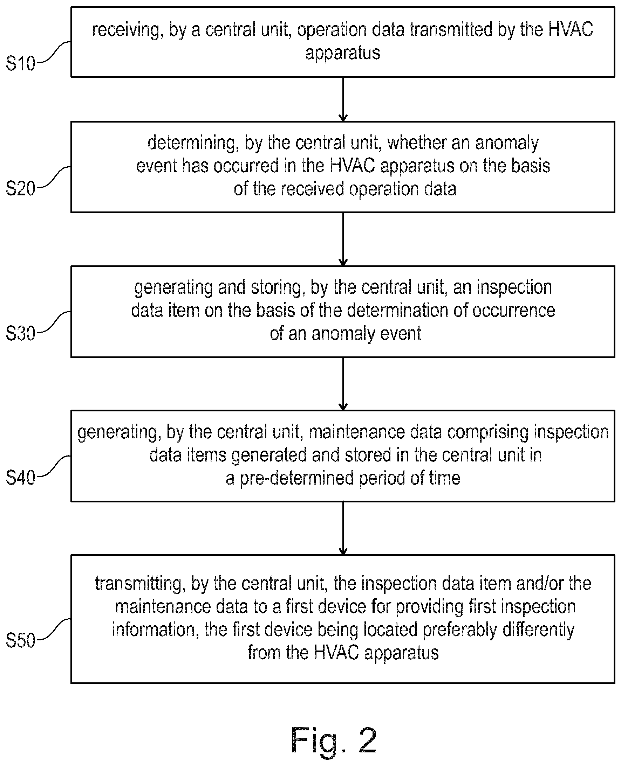

Fig. 2 shows a method for monitoring an HVAC apparatus in accordance with the present application, where a central unit receives operation data transmitted by an HVAC apparatus located at the site of an end user, and further generates inspection data item(s) and/or maintenance data on the basis of the inspection data items collected in a pre-determined period of time to a first device for providing first inspection information.

More specifically, the method in accordance with the present application comprises;
S10: receiving, by a central unit, operation data transmitted by the HVAC apparatus;
S20: determining, by the central unit, whether an anomaly event has occurred in the HVAC apparatus on the basis of the received operation data;
S30: generating and storing, by the central unit, an inspection data item on the basis of the determination of occurrence of an anomaly event;
S40; generating, by the central unit, maintenance data comprising inspection data items generated and stored in the central unit in a pre-determined period of time; and
S50: transmitting, by the central unit, the inspection data item and/or the maintenance data to a first device for providing first inspection information, the first device being located differently from the HVAC apparatus.

Therein, the central unit is preferably provided in the form of cloud services, which is provided with data storage and processing means for receiving and processing the relevant data. Further, the HVAC apparatus located at the site of the end user is configured to permanently transmit the operation data including operating parameters of the components in the HVAC apparatus to the central unit. Therein, the HVAC apparatus may be connected to the internet, i.e., to the central unit, in a wired or wireless manner. Thus, the central unit, having received the operation data transmitted by the HVAC apparatus, is configured to carry out an assessment as to whether an anomaly event has occurred in a component in the HVAC apparatus on the basis of the received operation data. More specifically, the corresponding operating parameters of the components/parts in the HVAC apparatus may be compared with corresponding checking criteria. For instance, whether the compressor is operating properly would be indicated by a field "compressor_function_check" in the inspection date item that is generated for the compressor functionality of the HVAC apparatus, such that in the case of anomaly, this filed would be noted as "0" to show that an anomaly event has occurred, whereas in case of no anomaly events in the functioning of the compressor, this field would be noted as "1" in the inspection data item, and vice versa. Further checking criteria concerning different functionalities of the HVAC apparatus may include, for instance:
"online_availability_check", "refrigerant_leakage_detection", "fuel_cell_output_check", "fuel_cell_low_runtime_check", and "gas_fan_function_check".

Of course, the functionalities that are checked on the basis of the operating data by the central unit are not limited to those as listed in the above. Further, the operating data may also include environmental parameters collected by sensors configured in the HVAC apparatus, as well as internal error messages provided on the basis of the internal diagnostic functions configured in the HVAC apparatus.

Thus, an inspection data item is generated for a specific functionality of a specific component in the HVAC apparatus, and preferably at a specific point of time. For instance, for the fuel cell in the HVAC apparatus, at least two functionalities could be checked as mentioned in the above. It is thus necessary to provide for each functionality of a specific component a different diagnostic algorithm for the analysis as to whether an anomaly event has occurred as to that specific functionality in this component in the HVAC apparatus. The algorithm is also permanently running such that at different points of time, inspection data items for that specific function of that specific HVAC component can be generated. Therefore, permanent and automatic inspection of a plurality of HVAC functionalities are implemented in the above-described manner.

The central unit further generates the maintenance data (report) comprising all of the inspection data items that are generated and stored in the central unit in a pre-determined period of time which is preferably 1 year, to which of course the present application is not limited. Therefore, for one specific functionality of one specific component in the HVAC apparatus provided at the site of a specific end-user, the maintenance report or more specifically the annual report would include all of the inspection data items that are collected in the past 1 year for all of the functionalities provided and monitored in the HVAC apparatus. On the basis of those inspection data items collected in the past year, the maintenance annual report comprises a summary including all of the problems/failures/anomalies/faults that have occurred in the HVAC apparatus.

As shown in Fig. 2, the central unit transmits the inspection data items or the maintenance report to the first device which is provided to the technician for providing the first inspection information. The first device is located at a site different from the HVAC apparatus, i.e., the end user. In this manner, the technician is enabled to firstly check the inspection data items and/or the maintenance report including all of the anomaly events occurred in the past year at least based on experiences. In particular, the technician is preferably instructed by means of a first request information comprised in the inspection data item or in the maintenance report to check the anomaly events transmitted to him. More specifically, the technician may be enabled to check as to whether the determination carried out by the central unit is correct or not. Further, the technician may be enabled or instructed to check a first diagnosed condition of the HVAC apparatus, by for instance, instructing in the form of the first instruction information, through the first device via the central units, the HVAC apparatus at the site of the end user to carry out a first diagnostic function which is internally provided for the HVAC apparatus, such that the HVAC apparatus provides the diagnosed results back to the central unit and then further back to the first device, to assist in the analysis of the anomaly events by the technician. Of course, the technician can also instruct via the first device the central unit to carry out the diagnostic functions configured therein. In summary, the technician is provided with means to request via the first device different diagnostic functions carried out by the central unit and/or the HVAC apparatus to provide an efficient and accurate analysis of the conditions of the components in the HVAC apparatus. It thus may be possible that the technician could already resolve some of the anomaly events that have occurred, and may hence thereafter further provide a first verification information to further provide an update as to the inspection data items and/or the maintenance report on the basis of the first inspection information. This is thus then accordingly reflected in the updated manual report as to that, for instance, some of the anomaly events have already been resolved. Thereby, transparency and efficiency in maintenance and inspection of the HVAC apparatus is improved.

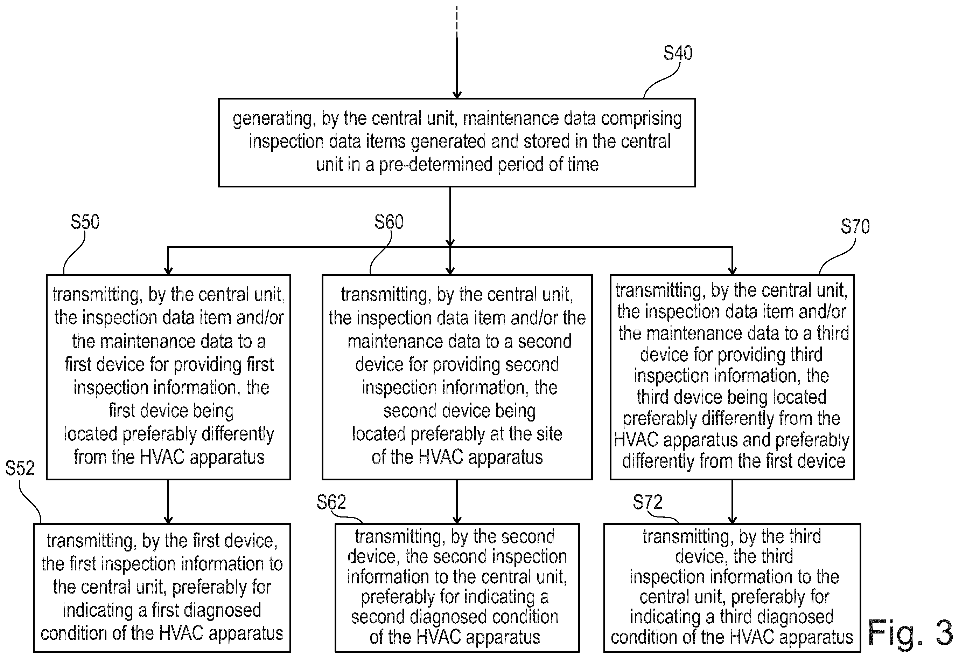

Fig. 3 shows a method in accordance with the present application, where, after the generation of the maintenance data in the central unit as illustrated in Fig. 2, the inspection data items and/or the maintenance data is transmitted to not only the first device, but also the second device provided for the end user and a third device provided for an after-sales service provider.

More specifically, after the above method step S40, there are provided in accordance with the method the following method steps including:
S50: transmitting, by the central unit, the inspection data item and/or the maintenance data to a first device for providing first inspection information, the first device being located differently from the HVAC apparatus; and
S52: transmitting, by the first device, the first inspection information to the central unit, for indicating a first diagnosed condition of the HVAC apparatus.

Further to that, the method also comprises after the method step S40 as follows:
S60: transmitting, by the central unit, the inspection data item and/or the maintenance data to a second device for providing second inspection information, the second device being located at the site of the HVAC apparatus; and
S62: transmitting, by the second device, the second inspection information to the central unit, for indicating a second diagnosed condition of the HVAC apparatus.

Furthermore, the method may also comprise after the method step S40 as follows:
S70: transmitting, by the central unit, the inspection data item and/or the maintenance data to a third device for providing third inspection information, the third device being located differently from the HVAC apparatus and differently from the first device; and
S72: transmitting, by the third device, the third inspection information to the central unit, for indicating a third diagnosed condition of the HVAC apparatus.

As discussed in the above in relation to Fig. 2, the inspection data items and the maintenance report are transmitted to the first device for providing the first inspection information. In an analogous manner, the inspection data items and the maintenance data are transmitted to the second device such that the end user may also provide the second inspection information, preferably carried out by a visual inspection of the HVAC apparatus on site. More specifically, the end user, after having received the inspection data items and the maintenance report, may be instructed via the second instruction information transmitted by the central unit and comprised in the corresponding inspection data items or the maintenance report, to carry out an on-site inspection by, for instance, taking a photo of the relevant components in the HVAC apparatus or filling out a checklist containing the items that need to be checked on site by the end user. Therefore, the second inspection information may be provided in the form of a photo or in the form of a checklist which could be later transmitted to the central unit for being downloaded to the first device at the site of the technician for further review. This thus also assists in the assessment of the anomaly events since the second diagnosed condition provided on the basis of the visual inspection of the user could be further provided to the central unit and then analogously to the technician using the first device for an accurate assessment of the anomaly event with the information obtained on site.

Analogously, the inspection data items and the maintenance report may be also transmitted to the after-sales service provider using the third device to which further diagnostic and assessment functionalities are also provided. More specifically, after having received the maintenance report and knowing the determined anomaly events, the after-sales service provider is instructed, preferably by a third instruction information transmitted from the central unit and/or the first device, so as to carry out further inspection of the anomaly events and provide the results thereof in the form of the third inspection information to the central unit. More specifically, the after-sales service provider may instruct via the third device further remote diagnostic functionalities for carrying out further assessment of the anomaly events. For instance, the third device may also send an instruction to the HVAC apparatus for it to run in a defined operating mode so as to check the corresponding operating results in that pre-defined operating mode. In addition, the after-sales service provider may also on the basis of the anomaly events and the third inspection information determine as to whether a recommendation to an on-site maintenance/service would be necessary. Therefore, there is provided preferably also bi-directional communications between the first device and the third device, i.e., between the technician and the after-sales service provider, such that both parties may receive the corresponding information as to the diagnostic results provided by the other party and as to whether any of the anomaly events have been dealt with by the other party.

In this manner, certain anomaly events that must be dealt with or could only be dealt with by the after-sales service provider could also be efficiently addressed by involving the third device, i.e., the after-sales service provider. In addition, since the after-sales service provider is provided with information as to the HVAC apparatus delivered to the end user and also to contact information of the end user, the after-sales service provider may also directly contact the end user via, for instance, telephone call or E-mail, to remind the user to remove the anomaly events which could be dealt with by the user in case of, for instance, an internet disconnection. In this manner, unnecessary maintenance work on site can be easily avoided, savings costs for both the end user and the service providers. Thereby, efficiency in the inspection and maintenance of the HVAC apparatus is also improved.

In addition, the second device and the third device, similar to the first device, may respectively provide a second verification information and a third verification information to further provide an update as to the inspection data items and/or the maintenance report on the basis of respectively the second and the third inspection information.

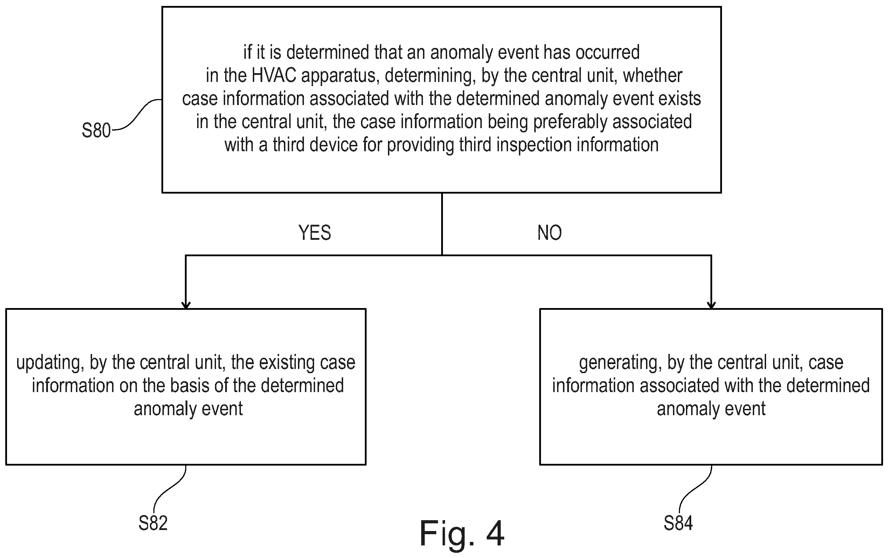

Fig. 4 shows a method for monitoring an HVAC apparatus in accordance with the present application, where the inspection and maintenance of the HVAC apparatus by way of monitoring of anomaly events is integrated with CRM cases established or to be established preferably in relation to the third device provided for the after-sales service provider.

More specifically, the method in accordance with the present application comprises as follows:
S80: if it is determined that an anomaly event has occurred in the HVAC apparatus, determining, by the central unit, whether case information associated with the determined anomaly event exists in the central unit, the case information being preferably associated with a third device for providing third inspection information;
If it is determined that case information exists, S82: updating, by the central unit, the existing case information on the basis of the determined anomaly event; and
If it is determined that no anomaly events exist, S84: generating, by the central unit, case information associated with the determined anomaly event.

In accordance with Fig. 4, case information associated with the determined anomaly event indicates whether CRM cases have been established for the presently determined anomaly event. In other words, given a determined anomaly event, it is checked by the central unit whether there has already been established a CRM case for this determined anomaly of one specific functionality in the HVAC apparatus. Thus, it is checked by the central unit whether the third device, i.e., the after-sales service provider has already been involved previously in a similar anomaly event or in the removal of a similar anomaly event regarding the specific functionality of the HVAC apparatus. For instance, for an HVAC apparatus, identified by its device ID, it may be found by the central unit that a CRM case has already been established in relation to the functionality of the compressor, identified by "compressor_function_check" as described in the above. Thus, if the central unit, following this functionality checking criterion "compressor_function_check", finds that a CRM case has already been established therefor, and has determined again an anomaly event in the compressor function, the central unit is configured to update the current status of the "compressor_function-_check". However, if no such case information, namely no previous CRM cases could be identified in the central unit, the central unit is then configured to generate a new CRM case for this determined anomaly event. In this manner, the case information provided by the third device from the after-sales service provider is furthermore integrated into the inspection and maintenance process of the HVAC apparatus. Of course, the case information can either be provided in the central unit, or could be provided in the form of a separate service which could be accessed by the central unit via, for instance, application program interface provided in a cloud solution.

The above described method steps in Fig. 3, namely steps S50-52, steps S60-62 and steps S70-72 may be carried out simultaneously or carried out at different times depending on the specific requirements as to whether one or more of the three devices would need to be involved in the inspection and maintenance process. Further, the method steps shown in Fig. 4 may be combined with those shown in Fig. 3 and thus could be carried out simultaneously with steps shown in Fig. 3 or at different times with those shown in Fig. 3, depending on whether CRM cases are necessary to be involved or integrated in the inspection and maintenance process.

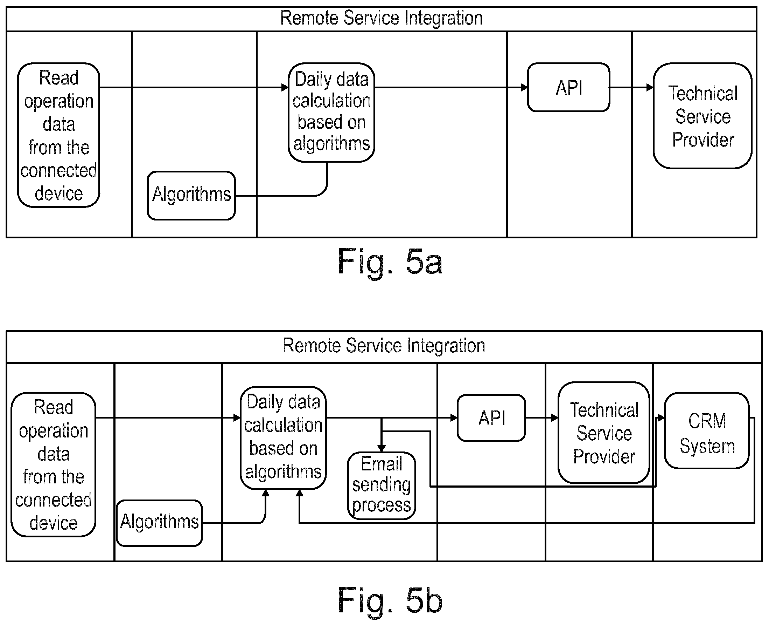

Figs. 5a and 5b show use cases regarding integration of the remote service, namely services provided by the technician and the after-sales service provider into the inspection and maintenance process carried out by the central unit.

More specifically, according to Fig. 5a the HVAC apparatus is transmitting operation data, and the central unit reads the received operation data from the device that is connected thereto via the internet. Further, in the central unit data calculation is permanently carried out based on algorithms specifically designed for different functionalities of the HVAC apparatus, wherein the generated inspection results in the form of, as described in the above, inspection data items and/or maintenance report (preferably an annual report) may be transmitted to remote service provider, including the technical service provider as shown in Fig. 5a and the after-sales service provider as shown in Fig. 5b. According to Figs. 5a and 5b the access of the central unit to the remote service providers, namely the technical service provider using the second device and the after-sales service provider using the third device, is provided by application program interfaces (API) which are standard services provided by, for instance, cloud services to allow communication between different entities involved in the cloud communication. Of course this is merely one possible implementation thereof, to which the present application is not limited. As illustrated in Fig. 5b, it is also provided in the central unit that, the inspection data items and/or the annual report may trigger that corresponding E-mails are sent to the other parties involved in the inspection process. For instance, the inspection data items and/or annual report may be informed to the technician, the after-sales service provider and the end user via corresponding E-mails. In such a manner it is ensured that all parties are timely informed of the inspection processes and the corresponding results thereof, thus improving transparency and efficiency of the inspection process. Additionally, the after-sales service provider and the technician are also timely informed of any anomaly event detected by the central unit, so as to take necessary measures to timely remove the anomaly events.

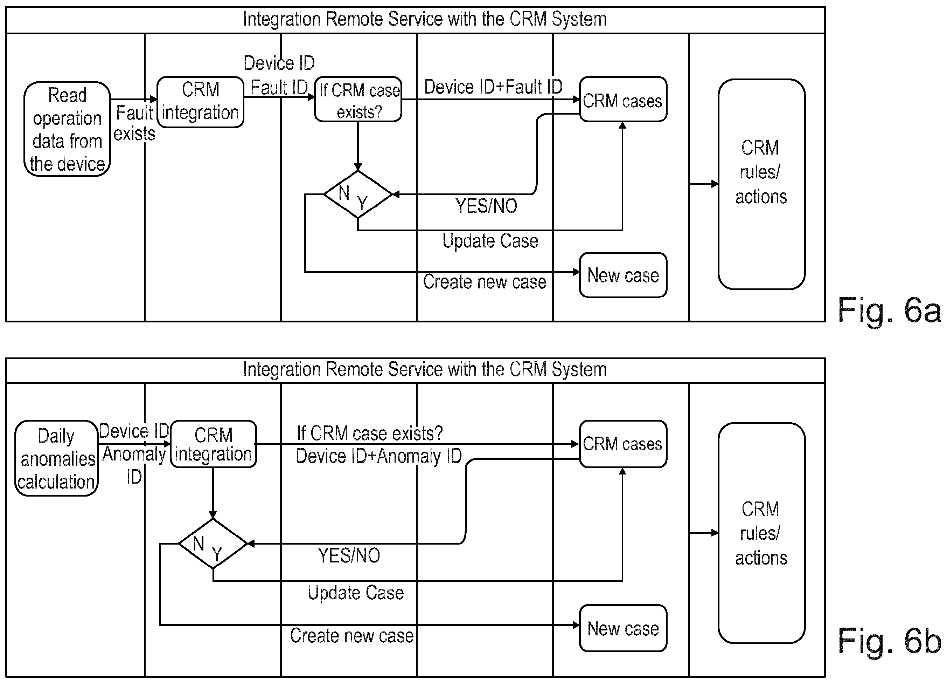

Figs. 6a-6c show use cases regarding the integration of the CRM cases with the remote services.

As illustrated in Fig. 6a, the integration of the CRM cases is triggered by the determination in the central unit that an anomaly event has occurred in relation to a functionality of the HVAC apparatus by the analysis of the received operation data in the manner as described in the above. In particular, regarding a functionality of the HVAC apparatus, the inspection item also records a device ID and a fault (anomaly) ID, following which it can be determined by the central unit as to whether any CRM cases have already been established for this combination of the device ID and the anomaly ID. If it is determined that no CRM cases exist in the central unit, a new CRM case is established using the device ID and the anomaly ID, whereas if it is determined that there already exists a CRM case for the combination of the device ID and the anomaly ID, the existing CRM case is updated on the basis of the newly received inspection data item recording the present status of the anomaly in the functionality. In accordance with the present application, the integration of the CRM cases may be carried out in the central unit, or may also be carried out using APIs for accessing data provided in another central unit (for instance, provided by another cloud service). More preferably, in accordance with the present application the CRM cases regarding anomalies in functionalities of the HVAC apparatus are provided in the central unit.

Figs. 6a and 6b show similar structures of the integration of the CRM cases with the remote services, wherein in Fig. 6a it is shown the inspection of system faults that have occurred in the HVAC system, whereas in Fig. 6b it is shown the daily inspection of anomalies that have occurred in the HVAC apparatus.

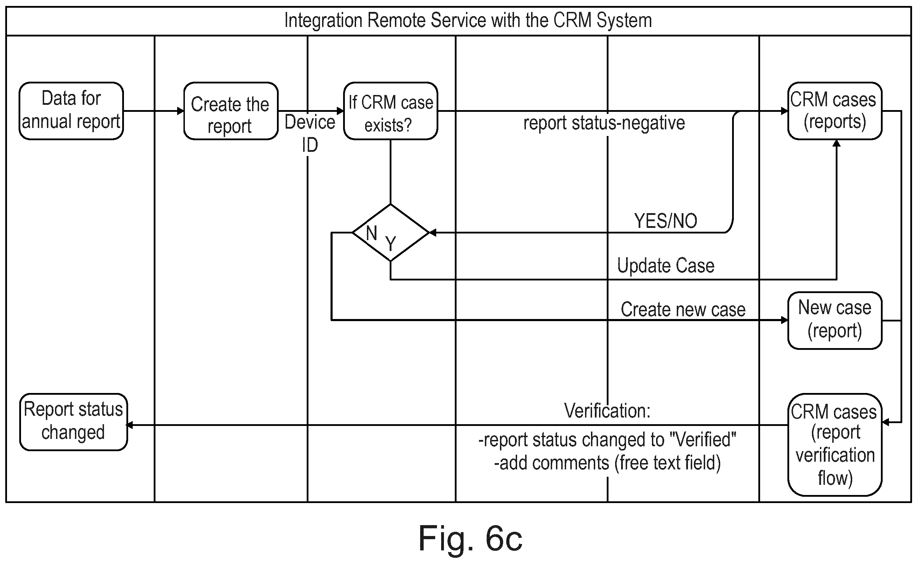

Fig. 6c shows the generation of an annual report summarizing the system faults and/or the anomaly events that have occurred in the HVAC system in the past predetermined period of time, for instance, 1 year.

In particular, after having collected all inspection data items on the basis of the operation data in the past year in the central unit, the central unit is configured to generate the annual report for the HVAC apparatus which is identified by its device ID. Following this device ID, it can also be checked by the central unit as to whether any previous CRM cases have already been established under this device ID, such that in case of yes, the previous CRM cases under this device ID are updated, whereas in case of no, a new case is generated, namely a new CRM case is established for this device ID in the past year, and accordingly the annual report is updated. In addition, there is provided a report verification process, namely that each of the first device, second device, and third device, namely each of the technician, the end user and the after-sales service provider may, after having received the annual report, further verify and add to the annual report the respective inspection information and/or verification results of the summarization provided in the annual report, and additionally also provide the respective comments thereto provided by means of, for instance, a free text field. Therefore, the report status might be changed after having been generated and transmitted to the devices (parties). In particular, it may be the case that at the night after the generation of the annual report and before the next day when transmitting the generated report to the first-third devices, further anomaly events may have occurred at that night, which renders necessary, for instance, for the end user to add to the annual report the newly occurred anomaly event. Of course, this newly occurred anomaly event will also be reported to the second and third devices via the central unit, which may then further review the newly occurred anomaly event, and add their respective comments or verification results as to the newly occurred anomaly event to the generated annual report, so that the annual report at the time of its transmission is at its latest status, improving efficiency in the generation of the annual report and accordingly also efficiency and transparency in inspection and maintenance of the HVAC apparatus.

Therefore, in accordance with the present application a comprehensive annual report is provided by the central unit so as to ensure that the monitored anomaly events and/or system faults are timely informed to the technical service provider and the after-sales service provider, wherein the reported anomaly events can be firstly checked by the technical service provider and the after-sales service provider, and it is ensured that the checked anomaly events and possibly already resolved anomaly events are further recorded in the annual report as such. Therefore, there is provided an efficient and transparent process for notifying and solving the HVAC anomaly events. In addition, with the remote inspection provided by the technical service provider and the after-sales service provider unnecessary yearly on-site maintenance work can be avoided since both the technician and the after-sales service provider may provide instructions as to the removal of anomaly events which can be carried out by the end user without an on-site maintenance work of the technician or the after-sales service provider, which thus saves costs for both the end user and the service providers.

Further, the annual inspection report which is generated and transmitted to all parties before a possible on-site maintenance work ensures that all anomaly events including those that have newly happened at the night before the transmission of the annual report are duly noted and transmitted to all parties.

## Claims

1. A method for monitoring an HVAC apparatus, comprising:
receiving (S10), by a central unit, operation data transmitted by the HVAC apparatus;
determining (S20), by the central unit, whether an anomaly event has occurred in the HVAC apparatus on the basis of the received operation data;
generating and storing (S30), by the central unit, an inspection data item on the basis of the determination of occurrence of an anomaly event;
generating (S40), by the central unit, maintenance data comprising inspection data items generated and stored in the central unit in a pre-determined period of time;
transmitting (S50), by the central unit, the inspection data item and/or the maintenance data to a first device for providing first inspection information, the first device being located differently from the HVAC apparatus, and
transmitting (S52), by the first device, the first inspection information to the central unit for indicating a first diagnosed condition of the HVAC apparatus,
**characterized in that**
the method further comprises:
transmitting (S60), by the central unit, the inspection data item and/or the maintenance data to a second device for providing second inspection information, the second device being located at the site of the HVAC apparatus; and
transmitting (S62), by the second device, the second inspection information to the central unit for indicating a second diagnosed condition of the HVAC apparatus,
wherein the method further comprises:
transmitting (S70), by the central unit, the inspection data item and/or the maintenance data to a third device for providing third inspection information, the third device being located differently from the HVAC apparatus and differently from the first device; and
transmitting (S72), by the third device, the third inspection information to the central unit, for indicating a third diagnosed condition of the HVAC apparatus.

2. The method in accordance with claim 1, wherein the method further comprises:
providing, by the central unit, first request information in the inspection data item, preferably for requesting the first inspection information via the first device, the first inspection information comprising an indication as to whether the determination of occurrence of an anomaly event is correct.

3. The method in accordance with claim 1 or claim 2, wherein the method further comprises:
transmitting, by the first device, first instruction information to the central unit, preferably for instructing the HVAC apparatus to carry out a first diagnostic function.

4. The method in accordance with any one of claims 1 to 3, wherein if it is determined that an anomaly event has occurred in the HVAC apparatus, the method further comprises:
determining (S80), by the central unit, whether case information associated with the determined anomaly event exists in the central unit, the case information being preferably associated with the third device for providing the third inspection information, wherein:
if it is determined that case information exists in the central unit, updating (S82), by the central unit, the existing case information on the basis of the determined anomaly event; and
if it is determined that case information does not exist in the central unit, generating (S84), by the central unit, case information associated with the determined anomaly event.

5. The method in accordance with claim 4, wherein the case information comprises the third instruction information, and the method further comprises: transmitting, by the central unit, the third instruction information to the third device, preferably for instructing the third device to carry out a third diagnostic function.

6. The method in accordance with any one of claims 1 to 5, wherein the method further comprises:
updating, by the central unit, the inspection data item and/or the maintenance data after receiving the first inspection information, and/or the second inspection information, and/or the third inspection information; and
transmitting, by the central unit, the updated inspection data item and/or the updated maintenance data to the first device, and/or the second device, and/or the third device.

7. The method in accordance with any one of claims 1 to 6, wherein,
the operation data comprises a device ID indicating the HVAC apparatus, and a component ID indicating a component in the HVAC apparatus; and
the inspection data item comprises an anomaly ID indicating an anomaly event associated with the device ID and/or the component ID.

8. The method in accordance with any one of claims 1 to 7, wherein:
the maintenance data comprises verification information provided by the first device, and/or the second device, and/or the third device, preferably for indicating anomaly events occurred after the generation of the maintenance data and before the transmission of the generated maintenance data.

9. The method in accordance with any one of claims 1 to 8, wherein the method comprises:
generating, by the central unit, the inspection data item on a daily basis; and/or providing, by the central unit, a timestamp in the inspection data item,
wherein the pre-determined period of time is preferably one year.

10. The method in accordance with any one of claims 1 to 9, wherein the method comprises:
transmitting, by the central unit, the inspection data item and/or the maintenance data to the first device, and/or the second device, and/or the third device, via E-Mail, and/or via an application program installed on the corresponding device, and/or via a webpage.

11. The method in accordance with any one of claims 1 to 10, wherein the method comprises:
running, by the central unit, an algorithm for determining whether an anomaly event has occurred in the HVAC apparatus, wherein the algorithm is preferably associated with a component of the HVAC apparatus where the anomaly occurs.

12. A system for monitoring an HVAC apparatus, the system comprising the HVAC apparatus, a central unit, a first device, a second device and a third device, the system being configured to carry out the method steps of claims 1 to 11.

13. Computer programs comprising instructions which, when the computer programs are executed by an HVAC apparatus, a central unit, a first device, a second device, and a third device, respectively cause the HVAC apparatus, the central unit, the first device, the second device, and the third device to carry out the method steps of claims 1 to 11.

## Patentansprüche

1. Verfahren zum Überwachen einer HLK-Vorrichtung, umfassend:
Empfangen (S10), durch eine Zentraleinheit, von Betriebsdaten, die durch die HLK-Vorrichtung übertragen werden;
Bestimmen (S20), durch die Zentraleinheit, ob ein Anomalieereignis in der HLK-Vorrichtung aufgetreten ist, auf der Basis der empfangenen Betriebsdaten;
Erzeugen und Speichern (S30), durch die Zentraleinheit, eines Inspektionsdatenelements auf der Basis der Bestimmung des Auftretens eines Anomalieereignisses;
Erzeugen (S40), durch die Zentraleinheit, von Wartungsdaten, die Inspektionsdatenelemente umfassen, die in der Zentraleinheit in einem vorbestimmten Zeitraum erzeugt und gespeichert werden;
Übertragen (S50), durch die Zentraleinheit, des Inspektionsdatenelements und/oder der Wartungsdaten an eine erste Vorrichtung zum Bereitstellen erster Inspektionsinformationen, wobei sich die erste Vorrichtung anders als die HLK-Vorrichtung befindet, und
Übertragen (S52), durch die erste Vorrichtung, der ersten Inspektionsinformationen an die Zentraleinheit zum Anzeigen eines ersten diagnostizierten Zustands der HLK-Vorrichtung,
**dadurch gekennzeichnet, dass**
das Verfahren ferner umfasst:
Übertragen (S60), durch die Zentraleinheit, des Inspektionsdatenelements und/oder der Wartungsdaten an eine zweite Vorrichtung zum Bereitstellen zweiter Inspektionsinformationen, wobei sich die zweite Vorrichtung am Standort der HLK-Vorrichtung befindet; und
Übertragen (S62), durch die zweite Vorrichtung, der zweiten Inspektionsinformationen an die Zentraleinheit zum Anzeigen eines zweiten diagnostizierten Zustands der HLK-Vorrichtung,
wobei das Verfahren ferner umfasst:
Übertragen (S70), durch die Zentraleinheit, des Inspektionsdatenelements und/oder der Wartungsdaten an eine dritte Vorrichtung zum Bereitstellen dritter Inspektionsinformationen, wobei sich die dritte Vorrichtung anders als die HLK-Vorrichtung und anders als die erste Vorrichtung befindet; und
Übertragen (S72), durch die dritte Vorrichtung, der dritten Inspektionsinformationen an die Zentraleinheit zum Anzeigen eines dritten diagnostizierten Zustands der HLK-Vorrichtung.

2. Verfahren nach Anspruch 1, wobei das Verfahren ferner umfasst:
Bereitstellen, durch die Zentraleinheit, erster Anforderungsinformationen in dem Inspektionsdatenelement, vorzugsweise zum Anfordern der ersten Inspektionsinformationen über die erste Vorrichtung, wobei die ersten Inspektionsinformationen eine Anzeige umfassen, ob die Bestimmung des Auftretens eines Anomalieereignisses korrekt ist.

3. Verfahren nach Anspruch 1 oder Anspruch 2, wobei das Verfahren ferner umfasst: Übertragen, durch die erste Vorrichtung, erster Anweisungsinformationen an die Zentraleinheit, vorzugsweise zum Anweisen der HLK-Vorrichtung, eine erste Diagnosefunktion auszuführen.

4. Verfahren nach einem der Ansprüche 1 bis 3, wobei, wenn bestimmt wird, dass ein Anomalieereignis in der HLK-Vorrichtung aufgetreten ist, das Verfahren ferner umfasst:
Bestimmen (S80), durch die Zentraleinheit, ob Fallinformationen, die dem bestimmten Anomalieereignis zugeordnet sind, in der Zentraleinheit vorhanden sind, wobei die Fallinformationen vorzugsweise der dritten Vorrichtung zum Bereitstellen der dritten Inspektionsinformationen zugeordnet sind, wobei:
wenn bestimmt wird, dass Fallinformationen in der Zentraleinheit vorhanden sind, Aktualisieren (S82), durch die Zentraleinheit, der vorhandenen Fallinformationen auf der Basis des bestimmten Anomalieereignisses; und
wenn bestimmt wird, dass Fallinformationen nicht in der Zentraleinheit vorhanden sind, Erzeugen (S84), durch die Zentraleinheit, von Fallinformationen, die dem bestimmten Anomalieereignis zugeordnet sind.

5. Verfahren nach Anspruch 4, wobei die Fallinformationen die dritten Anweisungsinformationen umfassen und das Verfahren ferner umfasst: Übertragen, durch die Zentraleinheit, der dritten Anweisungsinformationen an die dritte Vorrichtung, vorzugsweise zum Anweisen der dritten Vorrichtung, eine dritte Diagnosefunktion auszuführen.

6. Verfahren nach einem der Ansprüche 1 bis 5, wobei das Verfahren ferner umfasst:
Aktualisieren, durch die Zentraleinheit, des Inspektionsdatenelements und/oder der Wartungsdaten nach dem Empfangen der ersten Inspektionsinformationen und/oder der zweiten Inspektionsinformationen und/oder der dritten Inspektionsinformationen; und
Übertragen, durch die Zentraleinheit, des aktualisierten Inspektionsdatenelements und/oder der aktualisierten Wartungsdaten an die erste Vorrichtung und/oder die zweite Vorrichtung und/oder die dritte Vorrichtung.

7. Verfahren nach einem der Ansprüche 1 bis 6, wobei
die Betriebsdaten eine Vorrichtungs-ID, die die HLK-Vorrichtung angibt, und eine Komponenten-ID, die eine Komponente in der HLK-Vorrichtung angibt, umfassen; und
das Inspektionsdatenelement eine Anomalie-ID umfasst, die ein Anomalieereignis angibt, dass der Vorrichtungs-ID und/oder der Komponenten-ID zugeordnet ist.

8. Verfahren nach einem der Ansprüche 1 bis 7, wobei
die Wartungsdaten Verifizierungsinformationen umfassen, die durch die erste Vorrichtung und/oder die zweite Vorrichtung und/oder die dritte Vorrichtung bereitgestellt werden, vorzugsweise zum Angeben von Anomalieereignissen, die nach der Erzeugung der Wartungsdaten und vor der Übertragung der erzeugten Wartungsdaten aufgetreten sind.

9. Verfahren nach einem der Ansprüche 1 bis 8, wobei das Verfahren umfasst:
Erzeugen, durch die Zentraleinheit, des Inspektionsdatenelements auf einer täglichen Basis; und/oder
Bereitstellen, durch die Zentraleinheit, eines Zeitstempels in dem Inspektionsdatenelement,
wobei der vorbestimmte Zeitraum vorzugsweise ein Jahr ist.

10. Verfahren nach einem der Ansprüche 1 bis 9, wobei das Verfahren umfasst:
Übertragen, durch die Zentraleinheit, des Inspektionsdatenelements und/oder der Wartungsdaten an die erste Vorrichtung und/oder die zweite Vorrichtung und/oder die dritte Vorrichtung über E-Mail und/oder über ein Anwendungsprogramm, das auf der entsprechenden Vorrichtung installiert ist, und/oder über eine Webseite.

11. Verfahren nach einem der Ansprüche 1 bis 10, wobei das Verfahren umfasst:
Ausführen, durch die Zentraleinheit, eines Algorithmus zum Bestimmen, ob ein Anomalieereignis in der HLK-Vorrichtung aufgetreten ist, wobei der Algorithmus vorzugsweise einer Komponente der HLK-Vorrichtung zugeordnet ist, wo die Anomalie auftritt.

12. System zum Überwachen einer HLK-Vorrichtung, wobei das System die HLK-Vorrichtung, eine Zentraleinheit, eine erste Vorrichtung, eine zweite Vorrichtung und eine dritte Vorrichtung umfasst, wobei das System konfiguriert ist, um die Verfahrensschritte der Ansprüche 1 bis 11 auszuführen.

13. Computerprogramme, umfassend Anweisungen, die, wenn das Computerprogramm durch eine HLK-Vorrichtung, eine Zentraleinheit, eine erste Vorrichtung, eine zweite Vorrichtung und eine dritte Vorrichtung ausgeführt wird, jeweils die HLK-Vorrichtung, die Zentraleinheit, die erste Vorrichtung, die zweite Vorrichtung und die dritte Vorrichtung veranlassen, die Verfahrensschritte der Ansprüche 1 bis 11 auszuführen.

## Revendications

1. Procédé de surveillance d'un appareil HVAC, comprenant :
la réception (S10), par une unité centrale, de données de fonctionnement transmises par l'appareil HVAC ;
la détermination (S20), par l'unité centrale, si un événement d'anomalie s'est produit dans l'appareil HVAC sur la base des données de fonctionnement reçues ;
la génération et le stockage (S30), par l'unité centrale, d'un élément de données d'inspection sur la base de la détermination de la survenue d'un événement d'anomalie ;
la génération (S40), par l'unité centrale, de données de maintenance comprenant des éléments de données d'inspection générés et stockés dans l'unité centrale dans une période de temps prédéterminée ;
la transmission (S50), par l'unité centrale, de l'élément de données d'inspection et/ou des données de maintenance à un premier dispositif pour fournir des premières informations d'inspection, le premier dispositif étant situé différemment de l'appareil HVAC, et
la transmission (S52), par le premier dispositif, des premières informations d'inspection à l'unité centrale pour indiquer un premier état diagnostiqué de l'appareil HVAC,
**caractérisé en ce que**
le procédé comprend en outre :
la transmission (S60), par l'unité centrale, de l'élément de données d'inspection et/ou des données de maintenance à un second dispositif pour fournir des secondes informations d'inspection, le second dispositif étant situé au niveau du site de l'appareil HVAC ; et
la transmission (S62), par le second dispositif, des secondes informations d'inspection à l'unité centrale pour indiquer un second état diagnostiqué de l'appareil HVAC,
dans lequel le procédé comprend en outre :
la transmission (S70), par l'unité centrale, de l'élément de données d'inspection et/ou des données de maintenance à un troisième dispositif pour fournir des troisièmes informations d'inspection, le troisième dispositif étant situé différemment de l'appareil HVAC et différemment du premier dispositif ; et
la transmission (S72), par le troisième dispositif, des troisièmes informations d'inspection à l'unité centrale, pour indiquer un troisième état diagnostiqué de l'appareil HVAC.

2. Procédé selon la revendication 1, dans lequel le procédé comprend en outre :
la fourniture, par l'unité centrale, de premières informations de demande dans l'élément de données d'inspection, de préférence pour demander les premières informations d'inspection via le premier dispositif, les premières informations d'inspection comprenant une indication indiquant si la détermination de la survenue d'un événement d'anomalie est correcte.

3. Procédé selon la revendication 1 ou la revendication 2, dans lequel le procédé comprend en outre :
la transmission, par le premier dispositif, de premières informations d'instruction à l'unité centrale, de préférence pour ordonner à l'appareil HVAC de réaliser une première fonction de diagnostic.

4. Procédé selon l'une quelconque des revendications 1 à 3, dans lequel s'il est déterminé qu'un événement d'anomalie s'est produit dans l'appareil HVAC, le procédé comprend en outre :
la détermination (S80), par l'unité centrale, si des informations de cas associées à l'événement d'anomalie déterminé existent dans l'unité centrale, les informations de cas étant de préférence associées au troisième dispositif pour fournir les troisièmes informations d'inspection, dans lequel :
s'il est déterminé que des informations de cas existent dans l'unité centrale, la mise à jour (S82), par l'unité centrale, des informations de cas existantes sur la base de l'événement d'anomalie déterminé ; et
s'il est déterminé que des informations de cas n'existent pas dans l'unité centrale, la génération (S84), par l'unité centrale, d'informations de cas associées à l'événement d'anomalie déterminé.

5. Procédé selon la revendication 4, dans lequel les informations de cas comprennent les troisièmes informations d'instruction, et le procédé comprend en outre : la transmission, par l'unité centrale, des troisièmes informations d'instruction au troisième dispositif, de préférence pour ordonner au troisième dispositif de réaliser une troisième fonction de diagnostic.

6. Procédé selon l'une quelconque des revendications 1 à 5, dans lequel le procédé comprend en outre :
la mise à jour, par l'unité centrale, de l'élément de données d'inspection et/ou des données de maintenance après la réception des premières informations d'inspection, et/ou des deuxièmes informations d'inspection, et/ou des troisièmes informations d'inspection ; et
la transmission, par l'unité centrale, de l'élément de données d'inspection mis à jour et/ou des données de maintenance mises à jour au premier dispositif, et/ou au second dispositif, et/ou au troisième dispositif.

7. Procédé selon l'une quelconque des revendications 1 à 6, dans lequel,
les données de fonctionnement comprennent un ID de dispositif indiquant l'appareil HVAC, et un ID de composant indiquant un composant dans l'appareil HVAC ; et
l'élément de données d'inspection comprend un ID d'anomalie indiquant un événement d'anomalie associé à l'ID de dispositif et/ou à l'ID de composant.

8. Procédé selon l'une quelconque des revendications 1 à 7, dans lequel :
les données de maintenance comprennent des informations de vérification fournies par le premier dispositif, et/ou le second dispositif, et/ou le troisième dispositif, de préférence pour indiquer des événements d'anomalie survenus après la génération des données de maintenance et avant la transmission des données de maintenance générées.

9. Procédé selon l'une quelconque des revendications 1 à 8, dans lequel le procédé comprend :
la génération, par l'unité centrale, de l'élément de données d'inspection sur une base quotidienne ; et/ou
la fourniture, par l'unité centrale, d'une estampille temporelle dans l'élément de données d'inspection,
dans lequel la période de temps prédéterminée est de préférence d'un an.

10. Procédé selon l'une quelconque des revendications 1 à 9, dans lequel le procédé comprend :
la transmission, par l'unité centrale, de l'élément de données d'inspection et/ou des données de maintenance au premier dispositif, et/ou au second dispositif, et/ou au troisième dispositif, par l'intermédiaire d'un courrier électronique, et/ou par l'intermédiaire d'un programme d'application installé sur le dispositif correspondant, et/ou par l'intermédiaire d'une page Web.

11. Procédé selon l'une quelconque des revendications 1 à 10, dans lequel le procédé comprend :
l'exécution, par l'unité centrale, d'un algorithme pour déterminer si un événement d'anomalie s'est produit dans l'appareil HVAC, dans lequel l'algorithme est de préférence associé à un composant de l'appareil HVAC où l'anomalie se produit.

12. Système de surveillance d'un appareil HVAC, le système comprenant l'appareil HVAC, une unité centrale, un premier dispositif, un deuxième dispositif et un troisième dispositif, le système étant configuré pour réaliser les étapes de procédé des revendications 1 à 11.

13. Programmes informatiques comprenant des instructions qui, lorsque les programmes informatiques sont exécutés par un appareil HVAC, une unité centrale, un premier dispositif, un deuxième dispositif et un troisième dispositif, amènent respectivement l'appareil HVAC, l'unité centrale, le premier dispositif, le deuxième dispositif et le troisième dispositif à réaliser les étapes de procédé des revendications 1 à 11.
